# EUROPEAN PATENT SPECIFICATION

(11) **EP 4 530 998 B1**
(45) Date of publication and mention of the grant of the patent: **27.05.2026**
(21) Application number: 23315374.1
(22) Date of filing: 29.09.2023
(51) Int. Cl.: G06V 10/75, G06V 20/69

(54) **TENSORIAL TEMPLATE MATCHING**
TENSORALE VORLAGENANPASSUNG
MISE EN CORRESPONDANCE DE MODÈLES TENSORIELS

(43) Date of publication of application: 02.04.2025
(73) Proprietor: FEI COMPANY, Hillsboro, OR 97124 (US)
(72) Inventor: SANCHEZ, Antonio Martinez, Hillsboro, Oregon 97124-5793 (US); PHELIPPEAU, Harold, Hillsboro, Oregon 97124-5793 (US)
(74) Representative: Pecharová, Petra

(56) References cited:
- HENRIK SKIBBE ET AL: "3D Object Detection Using a Fast Voxel-Wise Local Spherical Fourier Tensor Transformation", 22 September 2010, PATTERN RECOGNITION, SPRINGER BERLIN HEIDELBERG, BERLIN, HEIDELBERG, PAGE(S) 412 - 421, ISBN: 978-3-642-15985-5, XP019153326

## Description

### FIELD OF THE INVENTION

The present invention relates to an improved method of template matching in image analysis. In particular, the present invention relates to template matching of target molecules in cellular cryogenic electron tomography that may be performed faster than before.

### BACKGROUND OF THE INVENTION

The present invention relates to template matching where a scan is performed of an image to determine matches to a target template. The present invention can be applied to 2D images and 3D images (volumetric images or tomograms), although this invention is considerably advantageous in the case of 3D images. The present invention may be used in template matching of a target that is present many times in an image, for example a particle within an image, e.g., ribosomes or proteasomes. More generally, template matching is widely used in the industry e.g., for image registration, alignment, object detection, counting, tracking, defect detection, volume reconstruction, etc. It is often used in such applications due its ease of use and interpretation.

A particular application of the present invention is cellular cryogenic electron tomography (Cryo-ET) which is a label-free imaging technique that provides 3D images (or tomograms) of organelles and protein complexes at nanometre resolution. This is done by opening windows into the cell with focused ion beam milling of a cryogenically frozen cell. A series of 2D images is taken of this thinned cellular sample from varying angles. The 2D images are then reconstructed into a 3D tomogram. This technique provides 3D snapshots of proteins at work within their functional environment, and provides a window into understanding how they, and other molecules, work together to carry out major processes in a cell. Cryo-ET serves two main purposes, namely protein structures discovery and functional cellular behaviour. In both cases, particles of interest are automatically picked to get their position, orientation, and class, usually using template matching.

Template matching is a brute force algorithm that computes correlation with a template of a target particle at every voxel of a tomogram. Voxels showing the highest correlation values correspond to instances of template positions in the tomogram having the best match to a particle recorded in the tomogram. In addition, because every instance of a template position may have any rotation of the target particle, the whole space of rotations of the target particle must be sampled and the correlation must be computed for all the rotations to find the optimal rotation at every voxel in the tomogram. This approach is computationally intensive and requires a significant amount of time to be computed even after algorithmic optimization, usage of the Fourier transform, parallelization, and down-sampling of the data. This leads to a strong bottleneck in the Cryo-ET analysis workflow.

Further background may be found in Henrik Skibbe et al: "3D Object Detection Using a Fast Voxel-Wise Local Spherical Fourier Tensor Transformation", 22 September 2010, Pattern Recognition, Springer Berlin Heidelberg, Berlin, Heidelberg, Page 412 - 421. As described in the abstract, the paper presents a novel approach for expanding spherical 3D-tensor fields of arbitrary order in terms of a tensor valued local Fourier basis. For an efficient implementation, a two step approach is suggested combined with the use of spherical derivatives. Based on this new transformation we conduct two experiments utilizing the spherical tensor algebra for computing and using rotation invariant features for object detection and classification. The first experiment covers the successful detection of non-spherical root cap cells of Arabidopsis root tips presented in volumetric microscopical recordings. The second experiment shows how to use these features for successfully detecting α-helices in cryo-EM density maps of secondary protein structures, leading to very promising results.

### SUMMARY OF THE INVENTION

The present invention resides in a method according to claim 1.

There is described herein a method of generating a tensorial template for template matching to determine instances of a target within an image; the method comprising: generating a tensorial template of the target, wherein the tensorial template describes the shape over all rotations of the target with a tensor field.

Optionally, the tensorial template comprises a tensor field of multiple tensors. The tensors may be of any order and any dimension according to a compromise between rotation accuracy and computational complexity required for the targeted application. For example, tensors of order 4 and dimension 4 may be used.

The target may be described by a model comprising an array of elements, for example pixels in a two-dimensional image or voxels in a three-dimensional image. The tensorial template may comprise a tensor per element of the model. The templates may be generated for different rotations of the target, each template comprising the array of elements. A tensor power is generated for each rotation of the target and the tensor power may comprise components that describe the shape of the target at that rotation. Each tensor power is calculated as a tensor power of a quaternion that describes the shape of the target at that rotation. Each tensor power may be calculated as a fourth power multiplication of the four components of a quaternion.

All tensors and all tensor powers have the same number of components, and each component of each tensor that represents one element of the target comprises the integral over all rotations of the product of the corresponding component of the tensor power for one rotation and a value of the one element of the template of the target for the one rotation. The value of each element may denote an intensity of that element. For example, the image may comprise a surface model of the target that used intensity values for each element to describe the shape of the surface of the target.

Optionally, the method comprises masking the model using an operator that bounds the model of the target prior to generating the components of the tensors thereby setting the size of the array of elements. The operator may be a symmetric positive semidefinite linear operator.

In some examples, there is provided a method of tensorial template matching to identify instances of a target within an image, the method comprising: generating a tensorial template of the target according to any of the methods described above; and using the tensorial template to identify instances of that target within an image.

In some examples, there is provided a method of template matching a template of a target to identify instances of that target within an image, the method comprising: obtaining a tensorial template of the target, wherein the tensorial template describes the shape at all rotations of the target with a tensor field; and using the tensorial template to identify instances of that target within an image. Obtaining a tensorial template of the target may comprise generating the tensorial template or retrieving the tensorial template from a library of saved tensorial templates.

Further optional features of the first and second aspects of the present invention will now be described.

Optionally, using the tensorial template to identify instances of the target within an image comprises: convolving the tensorial template with the image to obtain a convolved tensor field that provides information on the correlation of the tensorial template with the image at all positions and at all rotations within the image. Using the tensorial template to identify instances of the target within an image may comprise determining the best correlation value for each of the positions within the image by calculating a scalar map of the convolved tensor field at each position. The values populating the scalar map may be a measure of the best correlation value at each position. Each position may correspond to an element of the image, for example pixels in a two-dimensional image or voxels in a three-dimensional image. Calculating a scalar map of the convolved tensor field at each position may comprise calculating a scalar map of the total energy of the convolved tensor field at each position. The method may comprise calculating a scalar map of the total energy of the convolved tensor field at each position using a norm of the convolved tensor field at each position. A Frobenius norm may be used. Calculating the Frobenius norm of the convolved tensor field at each position may comprise calculating the square root of the absolute squares of the components of the tensors of the tensorial template at each position.

The method may further comprise identifying positions of instances of the target within the image by determining local maxima of the best correlation values. Identifying rotations of the target at each of the identified positions may comprise using a global optimisation technique.

Identifying rotations of the target at each of the identified positions may comprise identifying eigenvectors and eigenvalues of the convolved tensor field at each of the identified positions. Identifying rotations of the target at each of the identified positions by identifying eigenvectors and eigenvalues of tensors in the convolved tensor field at each of the identified positions may comprise unfolding tensors in the convolved tensor field into a matrix and performing operations on the matrix to determine the eigenvectors and eigenvalues. Performing operations on the matrix to determine the eigenvectors and eigenvalues comprises using several calls to shifted symmetric higher order power method restarted at different random rotations.

Identifying rotations of the target at each of the identified positions using a global optimisation technique may comprise sampling the space of rotations of the target expressed as quaternions and calculating the inner product between the selected tensors of the convolved tensor field and the quaternions. This provides a list of rotations that can be ranked by the value of this product. A list of peak positions with their most promising rotations (highest inner products) per peak may be returned.

Optionally, the method may further comprise identifying positions and rotations of the target using a global optimisation technique. The positions and rotations may be identified in a single step, rather than identifying the positions and the rotations sequentially as may be done for the methods described above. Positions and rotations of the target may be identified by identifying eigenvectors and eigenvalues of the convolved tensor field. Identifying positions and rotations of the target by identifying eigenvectors and eigenvalues of tensors in the convolved tensor field may comprise unfolding tensors in the convolved tensor field into a matrix and performing operations on the matrix to determine the eigenvectors and eigenvalues. Performing operations on the matrix to determine the eigenvectors and eigenvalues may comprise using several calls to shifted symmetric higher order power method restarted at different random rotations. Identifying rotations of the target at each of the identified positions may comprise sampling the space of rotations of the target expressed as quaternions and calculating the inner product between the selected tensors of the convolved tensor field and the quaternions. This may provide a list of rotations that can be ranked by the value of this product. A list of peak positions with their most promising rotations (highest inner products) per peak may be returned.

Preferably, using the tensorial template to identify instances of that target within an image comprises calculating normalised correlation values for each identified instance of the target within the image by local normalised cross-correlation of a non-tensorial template of the target with the image using, as inputs, the position and rotation identified for each instance of the target within the image. Advantageously, this step produces normalised cross-correlation values that allow better comparison of instances of identified positions and rotations. While calculating local normalised cross-correlation values is usually very time consuming, it is not in this instance as only the values for the identified positions and rotations need to be calculated, which massively reduces the computational space (from all positions and all rotations as is performed in conventional local normalised cross-correlation). The method may comprise generating each non-tensorial template from a model of the target to be a template describing the shape of the target at the corresponding identified rotation.

Optionally, the method further comprises providing a list of the identified instances of the target within the image. The list may comprise, for each instance of the target, the calculated local normalised cross-correlation value, the identified position and the identified rotation. The list may be limited according to a preference selected by a user.

The method may further comprise dividing the image into blocks. For each block in turn, the method may comprise convolving the tensorial template with that block of the image to obtain a convolved tensorial field that provides information on the correlation of the tensorial template with the image at all positions and all rotations within that block of the image. Then, the best correlation value for each of the positions within that block of the image may be determined thereby calculating a scalar map from the convolved tensor field. Then, the positions of instances of the target within that block of the image may be identified by determining local maxima of the best correlation values. Finally, rotations of the target at each of the identified positions may be identified using a global optimisation technique.

Hence, the previously described steps of convolving the tensorial template, determining correlation values for each position, and identifying positions and rotations of each instance of the target in the image as a whole is broken down into a series of routines performed on each block in turn. This can be advantageous where computer memory is limited.

Dividing the image into blocks may comprise dividing the image into contiguous units and defining each bock to comprise one unit plus an overlap portion extending into the adjacent units. The overlap may be a unform distance and the size of the overlap portion extension into adjacent units may be less than the greatest dimension of the target and may be more than half the test dimension of the target. The method may comprise, for each block, keeping positions identified within the unit of that block and discarding any positions identified within the overlap portion of that block.

The method may further comprise merging the rotations and positions identified in each block of the image prior to calculating the normalised cross correlation values calculated for each identified instance of the target within the image.

Optionally, the target is a particle and the image is a tomogram. The tomogram may be obtained using cellular cryogenic electron tomography. Alternatively, the target may be a defect and the image may be an image of a manufactured part. The defect may be a defect in a semiconductor material and the manufactured part may be a semiconductor part such as a chip or wafer.

There is also described a method of counting objects within an image, comprising any of the method described above, and providing the number of identified instances of the target in the image as an output. There is also described a method of tracking an object within a succession of images, comprising performing any of the methods described above to identify an instance of the target in each image of the succession of images.

The present invention also resides in a computer program comprising computer program instructions that, when executed by a computer processor, cause the computer processor to perform any of the method of claim 1, in a computer readable medium having such a computer program stored thereon and in a computer system comprising a computer processor and computer memory having such a computer program stored therein.

### LIST OF FIGURES

In order that the invention can be more readily understood, reference will now be made by way of example only, to the accompanying drawings in which:
Figure 1A shows a cryo-tomogram of a Chlamydomonas cell and Figure 1B shows surface models of the templates used to detect and identify the proteins shown in Figure 1A;
Figure 2 is a block diagram of a method of identifying molecules in a tomogram;
Figure 3 is a schematic representation of the method of identifying molecules in a tomogram of Figure 2;
Figure 4 is a flow diagram of a method of generating a tensorial template; and
Figure 5 is a schematic representation of an alternative method of identifying molecules in a tomogram.

### DETAILED DESCRIPTION

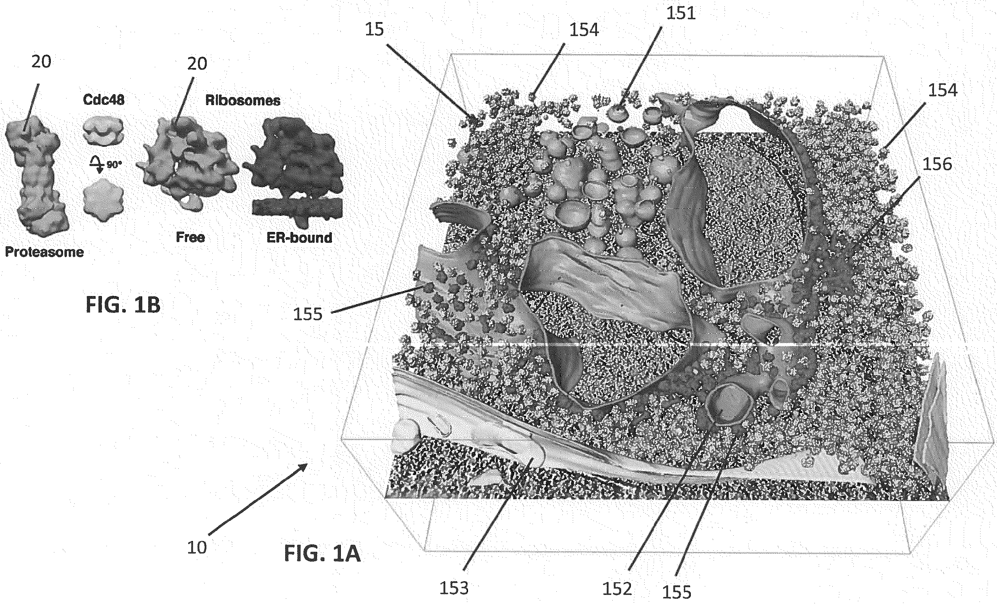

Figure 1A shows a cryo-tomogram 10 of a Chlamydomonas cell that includes structures 15 like Golgi apparatus 151, Endoplasmic Reticulum 152 and nuclear membrane 153. The tomogram 10 also contains many large molecules 15, most of which are ribosomes 154, 155, and proteasomes and CDC48-ATPase 156. These molecules 15 have been detected by template matching. Figure 1B shows surface models of templates 20 for particular rotations of large molecules 15 like those shown in Figure 1A. These templates 20 are derived from computer-generated models of the large molecules 15 and can be generated as a representation of a particular molecule 15 having a particular rotation. These templates 20 can be used to detect and identify instances of the large molecules 15 in the tomogram 10 of Figure 1A using the conventional template matching described above.

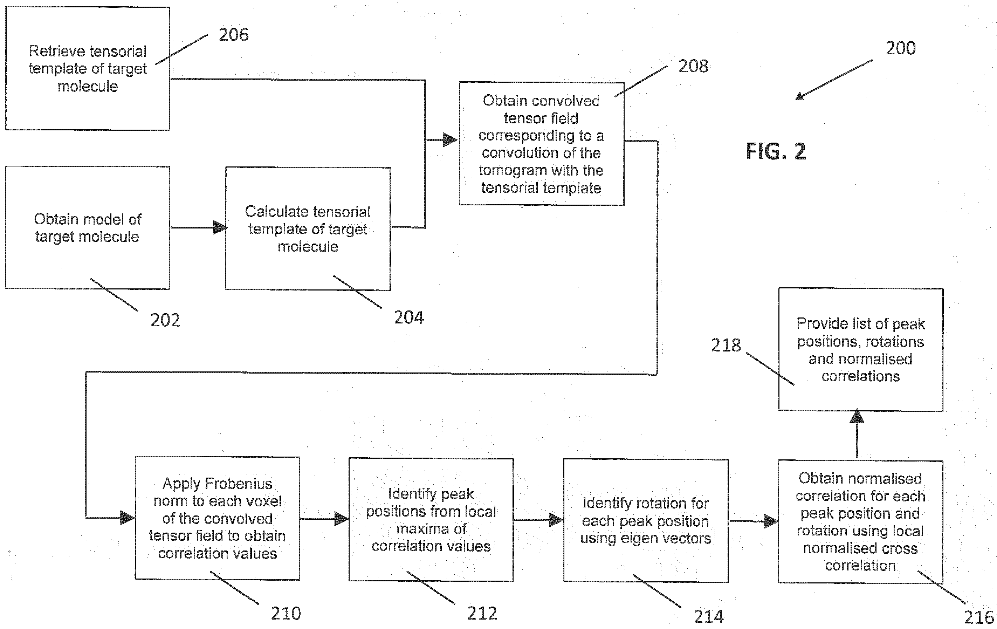

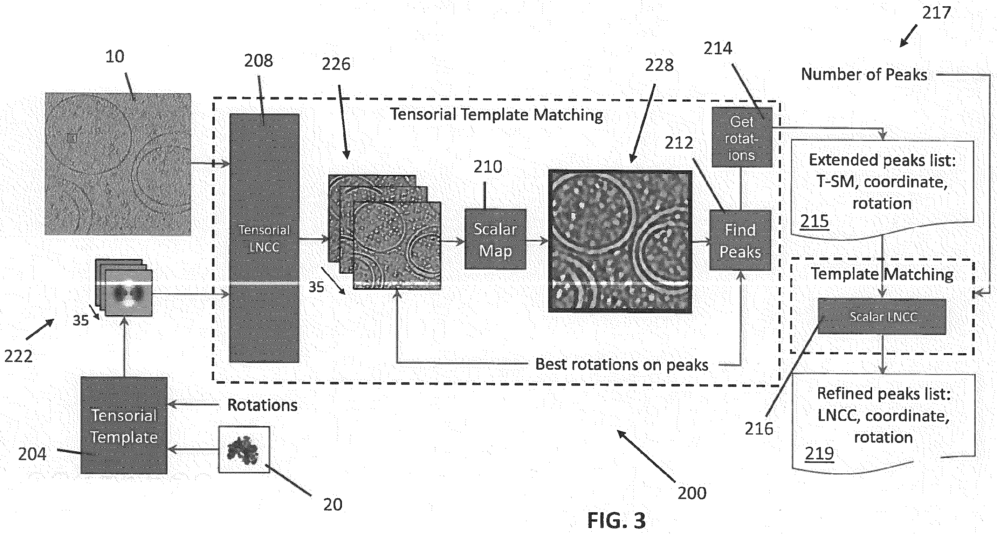

Figures 2 to 4 show a method 200 of identifying target molecules within a tomogram 10, such as at least some of the large molecules 15 of Figure 1B within the tomogram 10 of Figure 1A. In Figure 3, the tomogram 10 is shown as a two-dimensional representation for the sake of simplicity and clarity.

The method 200 begins by obtaining a tensorial template 222 of a target molecule. The tensorial template 222 describes the target molecule for all rotations with a tensor field. In traditional template matching, the templates 20 are generated of the target molecule in which the model of the target molecule is reduced to a finite but considerable number of snapshots of the target molecule in different rotations (e.g., tens to hundreds of thousands depending on the targeted accuracy). The tensorial template 222 described herein replaces traditional templates 20 with a tensor field of limited tensor order embedding all rotations of the target molecule.

A model of a target molecule of interest is obtained at step 202 and a tensorial template 222 is calculated for that target molecule at step 204. The tensorial template 222 describes the shape of the target molecule over all rotations using a tensor field that is generated as follows.

Many different rotations of the target molecule are sampled, with a mathematical description of each rotation being generated. These descriptions are then combined mathematically using an integration to derive each tensor of the tensorial template 222 that describes the shape of the target molecule over all rotations. A tensor is calculated for each voxel of model of the target molecule, hence forming the tensor field.

Each tensorial template 222 is a tensor field that embeds all rotations of a target molecule with tensors that have as many independent components as a tensor of order n and dimension d, e.g. 35 for a tensor of order 4 and dimension 4 (the number of components of the tensor depends upon the order and dimension of the tensor used). In this embodiment, quaternions are used to describe each rotation of the target molecule. To describe the target molecule in each of the sampled rotations, a tensor power is found as the n tensor power of q, where n is the order of the tensor and q is a vector of dimension d representing the rotation. In this embodiment, the quaternions are used as the vectors. Each quaternion is transformed into the tensor power that describes the corresponding rotation through a 4th power multiplication of the four components of each quaternion, which produces tensor powers with a dimension of 4. This dimension is preserved in the calculations that are performed to determine each tensor of the tensorial template 222. This leaves a choice in the order used for the tensor powers and hence in the tensors. This is a compromise in that the higher order of tensors used, the better accuracy that may be achieved. However, the computational cost also increases with the order. Using 4th-order, 4 dimension tensors provides a good compromise and this results in a tensorial template 222 with 35 linearly independent components (i.e. 35 distinct combinations of the four components of the quaternion).

To combine the tensor powers derived from each individual quaternion that each describe a single rotation of the target molecule, an integration is performed for each voxel of the model of the target molecule over all the sampled rotations, thereby deriving a voxel-by-voxel representation of the target molecule over all rotations. To do this, for each voxel, each of the 35 components of the tensor powers are combined with the corresponding rotated version of the model of the target molecule to provide a corresponding component in a tensor of the tensorial field. Consequently, the tensor of each voxel is created, and each tensor has as many components as the n order tensor describing the rotations (35 in this example). Specifically, each component of each tensor is calculated as the integral over all rotations of the product between the corresponding component of the tensor power, generated by the n power of the quaternion defining the rotation, and the corresponding intensity value of the voxel of the corresponding rotated model of the target molecule.

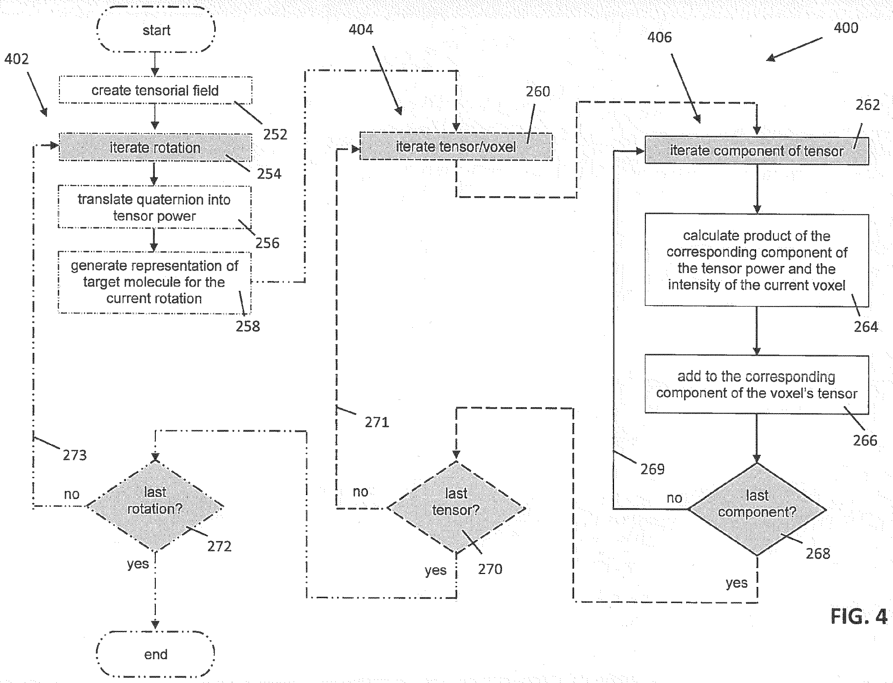

An example of a method 400 of calculating the tensorial template 222 is shown in Figure 4. In this example, the method starts at step 252 where a tensorial field is created. The tensorial field is provided with a tensor for each voxel, and each tensor has 35 components that are populated according to the following method steps that comprises three nested loops.

The first loop 402 is entered at step 254 when a first sampled rotation of the target molecule is selected. That sampled rotation is represented by one of the quaternions and, at step 256, the quaternion for the current rotation is translated into a corresponding tensor power. As described above, this tensor power will have 35 components. At step 258, a template 20 of the target molecule having the current rotation is generated from the model of the target molecule.

Next, the second loop 404 is entered at step 260 where the tensor of the first voxel is selected. The third loop 404 populates the components of this tensor in turn and, initially, a first of the 35 components of this tensor is selected at step 262. Then, the product of the corresponding component of the tensor power for the first sampled rotation and the intensity of the first voxel of the template 20 of the target molecule for the first sampled rotation is calculated at step 264. The value of this product is a scalar and, at step 266, that value is stored as the first component of the tensor of the first voxel that was selected at step 260.

With the first component of the tensor populated, the process is then repeated for each of the other 34 components of the tensor by iterating through multiple passes of loop 406, via loop path 268 and 269 and steps 262 to 266. That is, a new component of the tensor is selected at step 262, and the product of the corresponding component of the tensor power for the first rotation and the first voxel of the model of the target molecule is determined at step 264. The product is then added to the current component of the tensor at step 266. This is repeated for all the 35 components of the tensor such that each component of the tensor is populated with an initial scalar value. With this done, the test at step 268 determines that all components have been populated, and so the next tensor may be selected.

The next tensor is selected at step 260, and the third loop 406 repeated for the new tensor such that all the components of that tensor are populated. Each component of the new tensor is calculated as the method iterates through loop 406. Loop 404 ensures that this is repeated for each tensor, until the tensors for all the voxels have been populated with initial scalar values corresponding to the products of the corresponding component of the tensor powers and the intensity of the corresponding voxel for the first rotation of the target molecule. When the test at step 270 determines that all tensors have been processed once, we have a set of tensors with all tensors having values added for all 35 components of each tensor. These values correspond to the first sampled rotation of the target molecule though. Repeated iterations through loop 401 repeat this process for each sampled rotation of the target molecule.

Each time the method 400 returns to step 254, via loop path 272 and 273, a new rotation is selected. Then, at steps 256 and 258, the tensor power and representation of the target molecule at the new rotation are generated. The method then proceeds to iterate through the components of each tensor, one tensor at a time via loops 406 and 404. At each pass through step 264, the product of the current component of the current tensor power and the intensity of the current voxel for the current rotation is calculated. Each product comprises a scalar value that is added to the scalar value already stored for that component of the current tensor in subsequent step 266. As the method continues and iterates through successive rotations via loop 402, the steps performed for that rotation result in the scalar values stored in the tensors being updated to add the scalar values being determined. Therefore, as the method 400 completes over all iterations of the sampled rotations, each component of each tensor becomes the integration of all the products of the corresponding components of the tensor powers with the intensity of the corresponding voxel over all rotations. It is this set of tensors that make up the tensor field.

In summary: the tensorial template 222 is the tensorial field comprising the set of tensors for the voxels of the model of the target molecule; each voxel has an associated tensor; each tensor comprises the same number of components as the tensor powers, 35 components in this example; each component of each tensor is a scalar value; and each scalar value equals the integration of each of the products of the corresponding component of the tensor power and the intensity of the corresponding voxel in each rotated model of the target.

Before computing the integral, the model of the target molecule may be processed by a symmetric positive semidefinite linear operator which includes a spherical mask that defines the local neighbourhood of the model. This limits the number of voxels and provides a further advantage in a subsequent step of the method 200 that is described below.

Although its computation is not instantaneous (a few minutes to few hours, depending on the number of rotations sampled and the number of voxels in the model of the target molecule), it need be performed only once per target molecule (although it may be updated from time to time as the model of the target molecule is refined). Once calculated, the tensorial template 222 may be saved in a library for future use. Hence, as shown in an alternative path in Figure 2, the method 200 may start at step 206 where a tensorial template 222 of a target molecule 20 is simply retrieved from a library. Although not depicted in Figures 2 and 3, the model of the target molecule may be masked with a sphere enclosing tightly but completely the target molecule before computing the tensorial template 222. Masking the target molecule model helps to produce a functional tensorial template 222.

At step 208, the tensorial template 222, however obtained, is convolved with the tomogram 10 to produce a convolved tensor field 226 that contains information about the correlation of the tensorial template 222 in the whole space of rotation used to generate the tensorial template 222 with each voxel of the tomogram 10. Although not depicted in Figures 2 and 3, where a spherical template mask is used to produce the tensorial template 222, this also focusses the correlation to a neighbourhood approximating the target molecule size at every voxel of the tomogram 10. This convolved tensor field 226 may then be used to determine the best image matches for instances of the target molecule in the tomogram 10, both in terms of voxel position within the tomogram 10 and in terms of the rotation of the target molecule. To identify instances of the target molecule, the following multi-step process is performed.

In a first step 210, a scalar value is calculated for each voxel for the tomogram 10 from the convolved tensor field 226. These correlation values are calculated using a scalar valued function that has a critical value that indicates the best correlation position. The result of this calculation is a scalar map 228 that provides an estimation of the value of the best correlation of the tensorial template 222 at each voxel. In Figure 3, the scalar map 228 is shown as a two-dimensional representation for the sake of simplicity and clarity, although it will be understood that the scalar map 228 is three dimensional as it provides the estimated best correlation value at each voxel. A norm may be used to calculate the scalar values , for example a Frobenius norm a shown at step 210 of Figure 2. The Frobenius norm of a tensor is computed as the square root of the sum of the absolute squares of its components, so its computation is very efficient.

Step 210 produces a scalar map having a scalar value for each voxel of the tomogram. To determine the best candidates for instances of the target molecule in the tomogram 10, peak positions of peak values within the scalar map 228 are determined. This is found by determining the positions of the local maxima of the correlation values in the scalar map 228 using any conventional peak finding technique.

Next, at step 214, the rotation of the target molecule that produces the best correlation value is determined for each of the potential peak positions found in step 212. This may be performed using an eigen decomposition or by sampling the space of rotations defined by the quaternions, expanding the corresponding quaternions to n-order tensors and computing their inner product with respect to the convolved tensor field.

Step 214 of Figure 2 shows an example that uses an eigen decomposition. As noted above, the convolved tensor field 226 retains the information about all rotations, and eigenvector and eigenvalues can be used to determine the best match positions and corresponding rotations, i.e., those that produce the highest correlation values. This is performed by unfolding the tensors of the convolved tensor field 226 into a matrix and determining eigenvalues and eigenvectors from the matrix with each eigenvalue corresponding to the best correlation value. The eigenvector and eigenvalue for each identified position can be determined using a shifted symmetric higher-order power method. Since the symmetric higher-order power method is an iterative eigen decomposition that only allows for local searches, its precision is highly related with the starting point, which may be taken randomly, to ensure that the whole space of rotations is covered. The actual optimum is always found because this process is repeated many times, for example using 1000 uniformly distributed quaternions as starting points.

This technique can be used to identify the best rotations and the best peak positions, which may suggest step 212 is unnecessary. However, determining eigenvalues and eigenvectors is computationally expensive and so very time consuming if applied to all voxels in a typical tomogram 10. To avoid this problem, the much quicker technique of using the Frobenius norm is first used to determine the peak positions (this technique cannot identify the rotations) at steps 210 and 212. The Frobenius norm is related to its largest eigenvalue and so can be used as an approximation for finding the peak positions. Hence the Frobenius norm approximates the correlation value at each voxel, from which the peak positions are determined that correspond to the target molecule locations in the tomogram 10. Hence, steps 210 and 212 use the Frobenius norm and peak finding to identify peak positions that are then fed into the more refined technique of using eigenvectors to determine the best rotations of the target molecule at step 214. This produces much quicker execution times.

Alternatively, to ensure that the optimal rotation is not missed during the computation of the eigenvector, the space of rotations of the target molecule expressed as quaternions can be sampled. Afterwards, the inner product between the selected tensors of the convolved tensor field and the quaternions is computed so rotations can be ranked by this value. Finally, a list of peak positions with their most promising rotations (highest inner products) per peak is returned. Despite the necessity of sampling the space of rotations, this process is faster than computing standard cross-correlations because computing the inner product between a tensor and a quaternion is less costly than computing conventional local normalised cross-correlations. Moreover, this computation is suitable for further acceleration using high performance computing techniques.

As noted above, a symmetric positive semidefinite linear operator may be used when calculating the tensorial template 222 at step 204. This ensures that the inner product between the tensors and the unit quaternions expanded to n-order tensors attain the global maximum for the optimal template rotation. This global maximum is found in step 214 either by sampling the space of rotations defined by the quaternions or by unfolding tensors of the convolved tensor field 226 into matrices and finding their eigenvalues and eigenvectors. Thus, use of the symmetric positive semidefinite linear operator ensures the necessary information to provide correlation values that reflect the closeness of the match of the tensorial template 222 at any particular voxel in the tomogram 10.

Step 214 can produce a list of potential peaks as a peak position and best rotation (or several candidates providing the best rotations, as described in the preceding paragraph) against a correlation value, as shown at 215 in Figure 3. However, a consequence of using tensors is that the correlation values are not normalised across the entire tomogram 10. There is likely to be a variation across the tomogram 10, for example due to variations in illumination for various positions within the tomogram 10. A lack of normalised correlation values limits any attempt to rank the potential peaks. In addition, when the list contains more than one rotation per peak, providing normalised correlation values is required to allow a meaningful ranking of the best correlation values which in turn allows the best rotation per peak to be identified and selected.

Step 216 provides normalised cross-correlation values for each potential peak by utilising the conventional technique of local normalised cross-correlation, albeit in an extremely limited way. Advantageously, in this method 200, the calculation is required only for each potential peak position and best rotation value (or for each peak position and the limited list of best rotations, where provided). That is, a local normalised cross-correlation calculation is performed by comparing a conventional template 20 of the target molecule against the tomogram 10: however, it is performed by comparing the template 20 of the target molecule at the position for the target molecule found in step 212 and for only the single rotation of the target molecule corresponding to the best rotation found at step 214 (or for the select few best rotations identified). This may be contrasted to prior art techniques where local normalised cross-correlation is calculated for every single rotation of the target molecule (which is often around 30,000 rotations) at every single voxel. Hence, computational times are very much reduced and/or a larger number of best rotations may be used to increase accuracy.

Consequently, at step 216, a conventional template 20 is generated from the model of the target molecule: the template 20 provides a snapshot of the target molecule at the identified best rotation (or a template 20 for each of the best rotations where more than one rotation is provided). The local normalised cross-correlation value is then calculated for the template(s) at the identified position. Where more than one rotation is provided in step 214, the cross-correlation of step 216 provides a normalised cross-correlation score for each rotation. This allows the cross-correlation score of each of the best rotations to be compared in a meaningful way: the rotation achieving the highest cross-correlation score may then be selected and provided with the identified position.

At step 218, a list 219 of potential peak positions is provided. This list 219 contains, for each instance of the target molecule, the identified position, best rotation and normalised cross-correlation value (although, in some embodiments, the best rotation and/or normalised cross-correlation value may be omitted). The list 219 may be provided in different ways and with or without user input. For example, the list 219 may be ranked according to the normalised cross-correlation values.

Also, the numbers of potential peaks returned in the list 219 may be set by a user, as indicated at step 217. Further parameters set by the user at step 217 may include an absolute peak threshold, a relative peak threshold, and a minimal distance between peaks.

The number of potential peaks returned in the list 219 set by a user vary according to the intended use. As a first example, all instances of a particular target molecule may be wanted, in which case all potential peaks may be returned. Alternatively, to limit false identifications, a threshold normalised cross-correlation value may be set such that only potential peaks meeting or exceeding this cross-correlation value are included in the list of potential peaks 219. As a second example, a user may want to refine the structure of a target molecule through averaging the images of aligned instances of the target molecule found. This may be done by aligning each instance of the target molecule using the best rotation values and then averaging the aligned images of the target molecule. In this example, it is likely to be better to use fewer potential peaks, namely those peak positions with the best normalised cross-correlation scores as these instances will correspond best to the already determined target molecule structure (hence allowing that determined structure to be refined further).

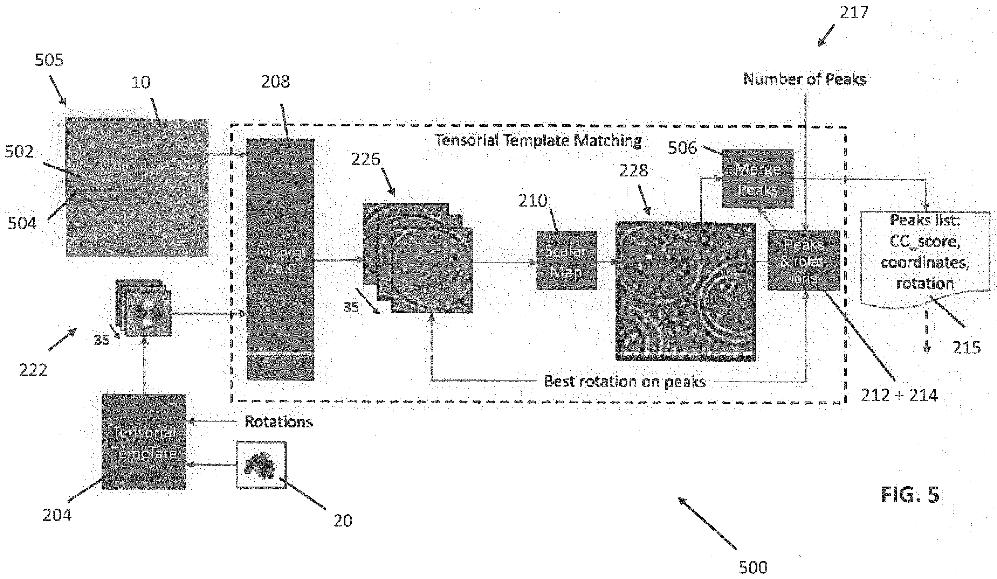

An alternative method 500 is shown in Figure 5 that uses block processing to reduce memory requirements. A tomogram 10 is divided into three-dimensional blocks 502 that are processed separately, before the results are merged. In the embodiment shown in Figure 5, the tomogram 10 is cubic (although illustrated as a square for simplicity) and is divided into eight contiguous cubic blocks. As will be appreciated, other arrangements may be used depending on the size and shape of the tomogram 10 and the memory available. Figure 5 shows one of the blocks 502, again as a two-dimensional square within the two-dimensional visualisation of the figure. The method 500 corresponds to method 200 already described, although implemented on a block-by-block basis. Hence, only the differences will now be explained.

Step 208 sees the tensorial template 222 convolved with part of the tomogram 10 to identify peaks, and hence molecules, within one of the blocks 502. To account for the fact that one or more target molecules may straddle a border between adjacent blocks 502, the tensorial template 222 is convolved with a portion 505 of the tomogram 10 that includes the block 502 and a halo 504 around the borders of the block 502 to overlap with adjacent blocks 502. Hence, the halo 504 extends into the adjacent blocks 502. The width of the halo 504 is selected to be around the greatest dimension of the target molecule (i.e., height, width, depth), for example between half of and all the greatest dimension as this ensures any instance of a target molecule is enclosed within one block 502 and its halo 504.

The portion 505 is then analysed in the same way as was described for method 200. The convolution at step 208 produces a convolved tensor field 226 that is processed at step 210, for example using the Frobenius norm, to produce a scalar map 228. Step 212 sees the peaks identified according to the local maxima in the correlation values present in the scalar map 228. Only peaks within the block 502 are identified or, if peaks in both the block 502 and the halo 504 are identified, only the peaks in the block 502 are retained and peaks in the halo 504 are discarded (as they will be identified when the block 502 in which the halo 504 resides is processed). At step 214, the best rotations are determined, for example using eigenvectors and eigenvalues found for each peak position in the list of peaks to determine the best rotations at each peak position, or alternatively to find several rotations for each peak using the inner products as described above.

Steps 208, 210, 212 and 214 are repeated for all the blocks 502. At step 506, the lists of peaks and rotations found for each block 501 are merged into a single list. Then, at step 216, conventional localised cross-correlation is used to determine the normalised cross-correlation values and these values are computed only for each peak position and best rotation pair (or each rotation for each position where more than single rotation is identified in step 214, in which case the best rotation is also identified from the normalised correlation values). The refined list of peak positions, rotations and normalised cross correlation scores are provided in step 218, as may be guided through user input of a desired number of peaks at step 215.

A person skilled in the art will appreciate that the above embodiments may be varied in many different respects without departing from the scope of the present invention that is defined by the appended claims.

Although the above embodiments relate to use of the invention in Cryo-ET, the present invention has many other uses. For example, the present invention can be applied both to 2D images and 3D images. The present invention may find use in object detection in image processing, counting objects in metrology, fiducial tracking for drift correction, fiducial detection for tomogram reconstruction, defects detection in semiconductors, etc. Even within Cryo-ET, the present invention can be used both for protein structures discovery and functional cellular behaviour studies.

## Claims

1. A method of template matching a tensorial template of a target particle to identify instances of that target within a tomogram, the method comprising:
obtaining a tensorial template of the target particle, wherein the tensorial template describes the shape at all rotations of the target particle with a tensor field; and
using the tensorial template to identify instances of that target particle within a tomogram; and
wherein:
obtaining a tensorial template of the target particle comprises generating the tensorial template, wherein the tensorial template comprises a tensor field of multiple tensors that describes the shape over all rotations of the target particle with a tensor field; and
**characterised in that**:
the target particle is described by a model comprising an array of voxels, and the tensorial template comprises a tensor per voxel of the model;
templates are generated for different rotations of the target particle, each template comprising the array of voxels;
a tensor power is generated for each rotation of the target particle and wherein the tensor power comprises components that describe the shape of the target particle at that rotation;
each tensor power is calculated as a tensor power of a quaternion that describes the shape of the target particle at that rotation; and
all tensors and all tensor powers have the same number of components, and each component of each tensor that represents one voxel of the target particle comprises the integral over all rotations of the product of the corresponding component of the tensor power for one rotation and a value of the one voxel of the template of the target particle for the one rotation.

2. The method of claim 1, wherein calculating each tensor power as a tensor power of a quaternion that describes the shape of the target particle at that rotation comprises calculating each tensor power as a fourth power multiplication of the four components of a quaternion.

3. The method of any of claim 1 or 2, comprising masking the model using an operator that bounds the model of the target particle prior to generating the components of the tensors thereby setting the size of the array of voxels.

4. The method of any of claims 1 to 3, wherein the operator is a symmetric positive semidefinite linear operator.

5. The method of any of claims 1 to 4, wherein using the tensorial template to identify instances of the target particle within the tomogram comprises:
convolving the tensorial template with the tomogram to obtain a convolved tensor field that provides information on the correlation of the tensorial template with the tomogram at all positions and at all rotations within the tomogram.

6. The method of claim 5, wherein using the tensorial template to identify instances of the target particle within the tomogram comprises:
determining the best correlation value for each of the positions within the tomogram by calculating a scalar map of the convolved tensor field at each position.

7. The method of claim 6, wherein calculating a scalar map of the convolved tensor field at each position comprises calculating a scalar map of the total energy of the convolved tensor field at each position using a norm, optionally the Frobenius norm, and the method further comprises identifying positions of instances of the target particle within the tomogram by determining local maxima of the best correlation values.

8. The method of claim 7, further comprising:
identifying rotations of the target particle at each of the identified positions using a global optimisation technique, optionally by identifying rotations of the target particle at each of the identified positions by identifying eigenvectors and eigenvalues of the convolved tensor field at each of the identified positions or by sampling the space of rotations of the target expressed as quaternions, and calculating the inner product between the selected tensors of the convolved tensor field and the quaternions.

9. The method of claim 8, wherein using the tensorial template to identify instances of the target particle within the tomogram comprises:
calculating normalised correlation values for each identified instance of the target particle within the tomogram by calculating the local normalised cross-correlation of a non-tensorial template of the target particle with the tomogram using, as inputs, the position and rotation identified for each instance of the target particle within the tomogram.

10. The method of claim 9, wherein:
the method further comprises generating each non-tensorial template from a model of the target particle to be a template describing the shape of the target particle at the corresponding identified rotation.

11. The method of any of claims 1 to 3, further comprising:
dividing the tomogram into blocks; and
for each block in turn:
convolving the tensorial template with that block of the tomogram to obtain a convolved tensor field that provides information on the correlation of the tensorial template with the tomogram at all positions and at all rotations within that block of the tomogram;
determining the best correlation value for each of the positions within that block of the tomogram thereby calculating a scalar map from the convolved tensor field;
identifying positions of instances of the target particle within that block of the tomogram by determining local maxima of the best correlation values;
identifying rotations of the target particle at each of the identified positions using a global optimisation technique; and, optionally,
merging the rotations and positions identified in each block of the tomogram prior to calculating the normalised correlation values calculated for each identified instance of the target particle within the tomogram.

12. The method of claim 11, wherein dividing the tomogram into blocks comprises dividing the tomogram into contiguous units and defining each block to comprise one unit plus an overlap portion extending into the adjacent units and, optionally, the size of the overlap portion extension into adjacent units is less than the greatest dimension of the target particle and more than half the test dimension of the target particle.

13. A computer program comprising computer program instructions that, when executed by a computer processor, cause the computer processor to perform the method of any preceding claim.

14. A computer readable medium having a computer program according to claim 13 stored thereon.

15. A computer system comprising a computer processor and computer memory having a computer program according to claim 13 stored therein.

## Patentansprüche

1. Verfahren zum Abgleichen einer Tensorvorlage eines Zielpartikels, um Instanzen dieses Ziels innerhalb eines Tomogramms zu identifizieren, wobei das Verfahren Folgendes umfasst:
Erhalten einer Tensorvorlage des Zielpartikels, wobei die Tensorvorlage die Form bei allen Rotationen des Zielpartikels mittels eines Tensorfeldes beschreibt; und
Verwenden der Tensorvorlage, um Instanzen dieses Zielpartikels innerhalb eines Tomogramms zu identifizieren; und
wobei:
das Erhalten einer Tensorvorlage des Zielpartikels das Erzeugen der Tensorvorlage umfasst, wobei die Tensorvorlage ein Tensorfeld aus mehreren Tensoren umfasst, das die Form über alle Rotationen des Zielpartikels mit einem Tensorfeld beschreibt; und
**dadurch gekennzeichnet, dass**:
das Zielpartikel durch ein Modell umfassend eine Anordnung von Voxeln beschrieben wird und die Tensorvorlage einen Tensor pro Voxel des Modells umfasst;
Vorlagen für verschiedene Rotationen des Zielpartikels erzeugt werden, wobei jede Vorlage die Anordnung von Voxeln umfasst;
für jede Rotation des Zielpartikels eine Tensorkraft erzeugt wird, wobei die Tensorkraft Komponenten umfasst, die die Form des Zielpartikels bei dieser Rotation beschreiben;
jede Tensorkraft als Tensorkraft eines Quaternions berechnet wird, das die Form des Zielpartikels bei dieser Rotation beschreibt; und
alle Tensoren und alle Tensorkräfte die gleiche Anzahl von Komponenten haben, und jede Komponente jedes Tensors, die ein Voxel des Zielpartikels darstellt, das Integral über alle Rotationen des Produkts aus der entsprechenden Komponente der Tensorkraft für eine Rotation und einem Wert des einen Voxels der Vorlage des Zielpartikels für die eine Rotation umfasst.

2. Verfahren nach Anspruch 1, wobei das Berechnen jeder Tensorkraft als Tensorkraft eines Quaternions, das die Form des Zielpartikels bei dieser Rotation beschreibt, das Berechnen jeder Tensorkraft als eine Multiplikation der vier Komponenten eines Quaternions mit der vierten Potenz umfasst.

3. Verfahren nach einem der Ansprüche 1 oder 2, umfassend das Maskieren des Modells unter Verwendung eines Operators, der das Modell des Zielpartikels vor der Erzeugung der Komponenten der Tensoren begrenzt, wodurch die Größe der Anordnung von Voxeln festgelegt wird.

4. Verfahren nach einem der Ansprüche 1 bis 3, wobei der Operator ein symmetrischer, positiver, semidefinierter, linearer Operator ist.

5. Verfahren nach einem der Ansprüche 1 bis 4, wobei die Verwendung der Tensorvorlage zur Identifizierung von Instanzen des Zielpartikels innerhalb des Tomogramms umfasst:
Falten der Tensorvorlage mit dem Tomogramm, um ein gefaltetes Tensorfeld zu erhalten, das Informationen über die Korrelation der Tensorvorlage mit dem Tomogramm an allen Positionen und bei allen Rotationen innerhalb des Tomogramms bereitstellt.

6. Verfahren nach Anspruch 5, wobei die Verwendung der Tensorvorlage zur Identifizierung von Instanzen des Zielpartikels innerhalb des Tomogramms umfasst:
Bestimmen des besten Korrelationswerts für jede der Positionen innerhalb des Tomogramms durch Berechnen einer Skalarabbildung des gefalteten Tensorfeldes an jeder Position.

7. Verfahren nach Anspruch 6, wobei das Berechnen einer Skalarabbildung des gefalteten Tensorfeldes an jeder Position das Berechnen einer Skalarabbildung der Gesamtenergie des gefalteten Tensorfeldes an jeder Position unter Verwendung einer Norm, optional der Frobenius-Norm, umfasst,
und das Verfahren ferner das Identifizieren von Positionen von Instanzen des Zielpartikels innerhalb des Tomogramms durch Bestimmen lokaler Maxima der besten Korrelationswerte umfasst.

8. Verfahren nach Anspruch 7, ferner umfassend:
Identifizieren von Rotationen des Zielpartikels an jeder der identifizierten Positionen unter Verwendung einer globalen Optimierungstechnik, optional durch
Identifizieren von Rotationen des Zielpartikels an jeder der identifizierten Positionen durch Identifizieren von Eigenvektoren und Eigenwerten des gefalteten Tensorfeldes an jeder der identifizierten Positionen oder durch Abtasten des als Quaternionen ausgedrückten Rotationsraums des Ziels, und Berechnen des Skalarprodukts zwischen den ausgewählten Tensoren des gefalteten Tensorfeldes und den Quaternionen.

9. Verfahren nach Anspruch 8, wobei die Verwendung der Tensorvorlage zur Identifizierung von Instanzen des Zielpartikels innerhalb des Tomogramms umfasst:
Berechnen normalisierter Korrelationswerte für jede identifizierte Instanz des Zielpartikels innerhalb des Tomogramms durch Berechnen der lokalen normalisierten Kreuzkorrelation einer nicht-tensoralen Vorlage des Zielpartikels mit dem Tomogramm unter Verwendung der für jede Instanz des Zielpartikels innerhalb des Tomogramms identifizierten Position und Rotation als Eingaben.

10. Verfahren nach Anspruch 9, wobei:
das Verfahren ferner das Erzeugen jeder nicht-tensoralen Vorlage aus einem Modell des Zielpartikels umfasst, wobei die Vorlage die Form des Zielpartikels bei der entsprechenden identifizierten Rotation beschreibt.

11. Verfahren nach einem der Ansprüche 1 bis 3, ferner umfassend:
Aufteilen des Tomogramms in Blöcke; und
für jeden Block nacheinander:
Falten der Tensorvorlage mit diesem Block des Tomogramms, um ein gefaltetes Tensorfeld zu erhalten, das Informationen über die Korrelation der Tensorvorlage mit dem Tomogramm an allen Positionen und bei allen Rotationen innerhalb dieses Blocks des Tomogramms bereitstellt;
Bestimmen des besten Korrelationswerts für jede der Positionen innerhalb dieses Blocks des Tomogramms, wodurch eine Skalarabbildung aus dem gefalteten Tensorfeld berechnet wird;
Identifizieren von Positionen von Instanzen des Zielpartikels innerhalb dieses Blocks des Tomogramms durch Bestimmen lokaler Maxima der besten Korrelationswerte;
Identifizieren von Rotationen des Zielpartikels an jeder der identifizierten Positionen unter Verwendung einer globalen Optimierungstechnik, und optional
Zusammenführen der in jedem Block des Tomogramms identifizierten Rotationen und Positionen vor dem Berechnen der normalisierten Korrelationswerte, die für jede identifizierte Instanz des Zielpartikels innerhalb des Tomogramms berechnet werden.

12. Verfahren nach Anspruch 11, wobei das Unterteilen des Tomogramms in Blöcke das Unterteilen des Tomogramms in kontige Einheiten und das Definieren jedes Blocks umfasst, sodass dieser eine Einheit sowie einen Überlappungsabschnitt umfasst, der sich in die benachbarten Einheiten erstreckt, und wobei optional die Größe der Ausdehnung des Überlappungsabschnitts in benachbarte Einheiten kleiner als die größte Abmessung des Zielpartikels und größer als die Hälfte der Testabmessung des Zielpartikels ist.

13. Computerprogramm umfassend Computerprogrammbefehle, die, wenn sie von einem Computerprozessor ausgeführt werden, den Computerprozessor veranlassen, das Verfahren eines der vorstehenden Ansprüche durchzuführen.

14. Computerlesbares Medium, auf dem ein Computerprogramm nach Anspruch 13 gespeichert ist.

15. Computersystem, umfassend einen Computerprozessor und einen Computerspeicher, in dem ein Computerprogramm nach Anspruch 13 gespeichert ist.

## Revendications

1. Procédé de correspondance d'un modèle tensoriel d'une particule cible afin d'identifier des instances de cette cible dans un tomogramme, le procédé comprenant :
l'obtention d'un modèle tensoriel de la particule cible, ce modèle tensoriel décrivant la forme de la particule cible pour toutes les rotations à l'aide d'un champ tensoriel ; et
l'utilisation du modèle tensoriel pour identifier les occurrences de cette particule cible au sein d'un tomogramme ; et
dans lequel :
l'obtention d'un modèle tensoriel de la particule cible consiste à générer ledit modèle tensoriel, lequel comprend un champ tensoriel composé de plusieurs tenseurs qui décrit la forme de la particule cible pour toutes les rotations à l'aide d'un champ tensoriel ; et
**caractérisé en ce que** :
la particule cible est décrite par un modèle constitué d'un réseau de voxels, et le modèle tensoriel comprend un tenseur par voxel du modèle ;
des modèles sont générés pour différentes rotations de la particule cible, chaque modèle comprenant le réseau de voxels ;
une puissance tensorielle est générée à chaque rotation de la particule cible, cette puissance tensorielle comprenant des composantes qui décrivent la forme de la particule cible à cette rotation ;
chaque puissance tensorielle est calculée comme la puissance tensorielle d'un quaternion décrivant la forme de la particule cible à cette rotation ; et
tous les tenseurs et toutes les puissances tensorielles possèdent le même nombre de composantes, et chaque composante de chaque tenseur représentant un voxel de la particule cible comprend l'intégrale, par rapport à toutes les rotations, du produit de la composante correspondante de la puissance tensorielle pour une rotation donnée et une valeur du voxel du modèle de la particule cible pour cette rotation.

2. Procédé selon la revendication 1, dans lequel le calcul de chaque puissance tensorielle en tant que puissance tensorielle d'un quaternion décrivant la forme de la particule cible à cette rotation comprend le calcul de chaque puissance tensorielle sous la forme d'une multiplication par la quatrième puissance des quatre composantes d'un quaternion.

3. Procédé selon l'une quelconque des revendications 1 ou 2, comprenant le masquage du modèle à l'aide d'un opérateur qui délimite le modèle de la particule cible avant de générer les composantes des tenseurs, définissant ainsi la taille du tableau de voxels.

4. Procédé selon l'une quelconque des revendications 1 à 3,
dans lequel l'opérateur est un opérateur linéaire symétrique semi-définitif positif.

5. Procédé selon l'une quelconque des revendications 1 à 4, dans lequel l'utilisation du modèle tensoriel pour identifier les instances de la particule cible au sein du tomogramme comprend :
une convolution entre le modèle tensoriel et le tomogramme afin d'obtenir un champ tensoriel convolué qui fournit des informations sur la corrélation entre le modèle tensoriel et le tomogramme à toutes les positions et pour toutes les rotations au sein du tomogramme.

6. Procédé selon la revendication 5, dans lequel l'utilisation du modèle tensoriel pour identifier les instances de la particule cible au sein du tomogramme comprend :
la détermination de la meilleure valeur de corrélation pour chacune des positions du tomogramme en calculant une carte scalaire du champ tensoriel convolué à chaque position.

7. Procédé selon la revendication 6, dans lequel le calcul d'une carte scalaire du champ tensoriel convolué à chaque position comprend le calcul d'une carte scalaire de l'énergie totale du champ tensoriel convolué à chaque position à l'aide d'une norme, éventuellement la norme de Frobenius,
et le procédé comprend en outre l'identification des positions des instances de la particule cible au sein du tomogramme par la détermination des maxima locaux des meilleures valeurs de corrélation.

8. Procédé selon la revendication 7, comprenant en outre :
l'identification des rotations de la particule cible à chacune des positions identifiées à l'aide d'une technique d'optimisation globale, éventuellement en
identifiant les rotations de la particule cible à chacune des positions identifiées par l'identification des vecteurs propres et des valeurs propres du champ tensoriel convolué à chacune des positions identifiées, ou en échantillonnant l'espace des rotations de la particule cible exprimées sous forme de quaternions, et en calculant le produit scalaire entre les tenseurs sélectionnés du champ tensoriel convolué et les quaternions.

9. Procédé selon la revendication 8, dans lequel l'utilisation du modèle tensoriel pour identifier les instances de la particule cible au sein du tomogramme comprend :
le calcul des valeurs de corrélation normalisées pour chaque occurrence identifiée de la particule cible au sein du tomogramme, par le biais du calcul de la corrélation croisée normalisée locale entre un modèle non tensoriel de la particule cible et le tomogramme, en utilisant comme données d'entrée la position et la rotation identifiées pour chaque occurrence de la particule cible au sein du tomogramme.

10. Procédé selon la revendication 9, dans lequel :
le procédé comprend en outre la génération de chaque modèle non tensoriel à partir d'un modèle de la particule cible, de manière à obtenir un modèle décrivant la forme de la particule cible lors de la rotation identifiée correspondante.

11. Procédé selon l'une quelconque des revendications 1 à 3, comprenant en outre :
la division du tomogramme en blocs ; et
pour chaque bloc, l'un après l'autre :
une convolution entre le modèle tensoriel et ce bloc du tomogramme afin d'obtenir un champ tensoriel convolué qui fournit des informations sur la corrélation entre le modèle tensoriel et le tomogramme à toutes les positions et pour toutes les rotations au sein de ce bloc du tomogramme ;
la détermination de la meilleure valeur de corrélation pour chacune des positions au sein de ce bloc du tomogramme, calculant ainsi une carte scalaire à partir du champ tensoriel convolué ;
l'identification des positions des instances de la particule cible au sein de ce bloc du tomogramme par la détermination des maxima locaux des meilleures valeurs de corrélation ;
l'identification des rotations de la particule cible à chacune des positions identifiées à l'aide d'une technique d'optimisation globale ; et, éventuellement,
la fusion des rotations et des positions identifiées dans chaque bloc du tomogramme avant de calculer les valeurs de corrélation normalisées pour chaque occurrence identifiée de la particule cible au sein du tomogramme.

12. Procédé selon la revendication 11, dans lequel la division du tomogramme en blocs consiste à diviser le tomogramme en unités contiguës et à définir chaque bloc de manière à ce qu'il comprenne une unité ainsi qu'une partie de chevauchement s'étendant dans les unités adjacentes et, éventuellement, la taille de la partie de chevauchement s'étendant dans les unités adjacentes est inférieure à la plus grande dimension de la particule cible et supérieure à la moitié de la dimension de test de la particule cible.

13. Programme informatique comprenant des instructions de programme informatique qui, lorsqu'elles sont exécutées par un processeur informatique, amènent ce dernier à mettre en œuvre le procédé selon l'une quelconque des revendications précédentes.

14. Support
lisible par ordinateur sur lequel est stocké un programme informatique selon la revendication 13.

15. Système informatique
comprenant un processeur et une mémoire informatique dans laquelle est stocké un programme informatique selon la revendication 13.
